# EUROPÄISCHE PATENTSCHRIFT

(11) **EP 4 146 983 B1**
(45) Veröffentlichungstag und Bekanntmachung des Hinweises auf die Patenterteilung: **06.12.2023**
(21) Anmeldenummer: 21720250.6
(22) Anmeldetag: 20.04.2021
(51) Int. Cl.: F21V 8/00, F21S 43/241, F21S 43/237, F21S 43/245, F21S 43/251, F21S 43/20

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 04.05.2020 EP 20172744
(43) Veröffentlichungstag der Anmeldung: 15.03.2023
(73) Patentinhaber: ZKW Group GmbH, 3250 Wieselburg (AT)
(72) Erfinder: MAIER, Christian, 3281 Oberndorf an der Melk (AT); FIRAT, Tuncay, 3100 St. Pölten (AT)
(74) Vertreter: Patentanwaltskanzlei Matschnig & Forsthuber OG
(86) Internationale Anmeldenummer: PCT/EP2021/060168
(87) Internationale Veröffentlichungsnummer: WO 2021/223999

(56) Entgegenhaltungen:
- EP-A1- 3 505 811
- DE-A1-102018 130 425
- DE-A1-102019 106 407

## Beschreibung

Die Erfindung betrifft eine Beleuchtungsvorrichtung für ein Kraftfahrzeug oder für ein Kraftfahrzeugscheinwerfer-System, wobei die Beleuchtungsvorrichtung Folgendes umfasst:
- ein Leuchtmittel zur Erzeugung und Abstrahlung von Licht,
- einen Lichtleiter, wobei das Licht des Leuchtmittels in den Lichtleiter eingekoppelt und an einer Auskoppelfläche des Lichtleiters ausgekoppelt wird, wobei der Lichtleiter einen ersten Bereich und einen an den ersten Bereich anschließenden gekrümmten Bereich aufweist, wobei sich die Auskoppelfläche über den ersten und den gekrümmten Bereich erstreckt und dergestalt ausgebildet ist, dass die Lichtstrahlen nach dem Auskoppeln aus dem ersten Bereich parallel zueinander orientiert sind,
- ein erstes optisches Element mit einer Lichteintrittsfläche, welche einen ersten Abschnitt und einen an den ersten Abschnitt angrenzenden zweiten Abschnitt aufweist, wobei das erste optische Element zu dem Lichtleiter dergestalt angeordnet ist, dass Licht, welches aus dem ersten Bereich des Lichtleiters ausgekoppelt wird, auf den ersten Abschnitt der Lichteintrittsfläche des ersten optische Elements trifft, und Licht, welches aus dem gekrümmten Bereich des Lichtleiters ausgekoppelt wird, auf einen Teilbereich des zweiten Abschnitts der Lichteintrittsfläche des ersten optischen Elements trifft.

Die Erfindung betrifft ferner ein Kraftfahrzeugscheinwerfer-System.

Die Erfindung betrifft überdies ein Kraftfahrzeug mit einer Beleuchtungsvorrichtung oder einem Kraftfahrzeugscheinwerfer-System.

Aus der DE 10 2018 130 425 A1 ist eine Beleuchtungsvorrichtung bekannt, welche einen geraden und einen gekrümmten Lichtleiter umfasst, wobei jedem Lichtleiter ein Leuchtmittel zugeordnet ist und Licht in den entsprechenden Lichtleiter einstrahlt. Soll nun ein Bereich mit der Beleuchtungsvorrichtung beleuchtet werden, beleuchtet das erste Leuchtmittel mittels dem geraden Lichtleiter einen ersten Abschnitt des Bereichs und das zweite Leuchtmittel mittels dem gekrümmten Lichtleiter einen zweiten Abschnitt des Bereichs.

Nachteiligerweise müssen bei der DE 10 2018 130 425 A1 zwei Leuchtmittel und zwei Lichtleiter verwendet werden um den gesamten Bereich vollständig zu beleuchten. Dies führt zu hohen Kosten und einer komplexeren Bauart der Beleuchtungsvorrichtung.

Die Erfindung setzt sich daher zum Ziel, eine Beleuchtungsvorrichtung zu schaffen, bei welcher die Nachteile des Stands der Technik gelindert werden.

Diese Aufgabe wird durch eine Beleuchtungsvorrichtung mit den Merkmalen von Anspruch 1 gelöst. Bevorzugte Ausführungen sind in den abhängigen Ansprüchen angegeben.

Erfindungsgemäß weist die Beleuchtungsvorrichtung ein zweites optisches Element auf, welches zwischen dem gekrümmten Bereich des Lichtleiters und dem zweiten Abschnitt der Lichteintrittsfläche des ersten optischen Elements dergestalt angeordnet und dazu eingerichtet ist, Licht, welches aus dem gekrümmten Bereich des Lichtleiters ausgekoppelt wird, derart umzulenken, dass das Licht, nach dem Durchtritt durch das zweite optische Element, auf den gesamten zweiten Abschnitt der Lichteintrittsfläche des ersten optischen Elements trifft.

Dadurch ergibt sich der Vorteil, dass mit einem Leuchtmittel, welches vorzugsweise eine einzige Lichtquelle umfasst, die gesamte Lichteintrittsfläche des ersten optischen Elements beleuchtet werden kann, insbesondere der gesamte Randbereich bzw. äußere Bereich der Lichteintrittsfläche. Der erste Bereich des Lichtleiters kann gerade ausgebildet sein oder eine Krümmung aufweisen, wobei in diesem Fall die Krümmung des ersten Bereichs vorzugsweise geringer ist als die Krümmung des gekrümmten Bereichs des Lichtleiters. Das zweite optische Element ist vorzugsweise dazu eingerichtet, das Licht, welches aus dem gekrümmten Bereich des Lichtleiters radial bzw. nicht parallel abgestrahlt wird, einerseits in Richtung des gesamten zweiten Abschnitts der Lichteintrittsfläche des ersten optischen Elements umzulenken, so dass der zweite Abschnitt vollständig beleuchtet wird, und andererseits die Lichtstrahlen beim Austritt aus dem zweiten optischen Element zu parallelisieren. Die Lichtstrahlen sind nach dem Austritt aus dem zweiten optischen Element insbesondere in vertikaler und horizontaler Richtung parallel zueinander orientiert. Die Lichtstrahlen sind vorzugsweise nach dem Austritt aus dem zweiten optischen Element orthogonal zu dem ersten und/oder zweiten Abschnitt der Lichteintrittsfläche orientiert. Die Lichteintrittsfläche kann einen stufenförmigen Aufbau aufweisen, wobei die Lichtstrahlen, nach dem Austritt aus dem zweiten optischen Element, bevorzugt orthogonal zu jenen parallel zueinander angeordneten Stufenabschnitten orientiert sind, welche im Wesentlichen parallel zu dem ersten Bereich des Lichtleiters orientiert sind.

Es kann vorgesehen sein, dass der erste Bereich des Lichtleiters und der erste Abschnitt des optischen Elements im Wesentlichen parallel zu einander orientiert sind. Dadurch kann Licht, welches von dem ersten Bereich des Lichtleiters abgestrahlt wird, besonders effizient in den ersten Abschnitt des ersten optischen Elements eingestrahlt werden.

Es kann vorgesehen sein, dass die Lichtstrahlen nach dem Auskoppeln aus dem Lichtleiter orthogonal zu dem ersten Bereich des Lichtleiters und/oder vorzugsweise orthogonal zur Lichteintrittsfläche des ersten optischen Elements orientiert sind. Der Lichtleiter kann länglich bzw. zylinderförmig ausgestaltet sein, wobei die Lichtstrahlen vorzugsweise orthogonal zur Längsausdehnung bzw. zur Zylinderachse aus dem Lichtleiter ausgekoppelt werden. Bevorzugt sind die Lichtstrahlen nach dem Auskoppeln in x-Richtung orientiert, wobei die x-Richtung der Längsachse eines Kraftfahrzeugs entspricht, welches die Beleuchtungsvorrichtung aufweist.

Es kann vorgesehen sein, dass Licht, welches aus dem ersten Bereich des Lichtleiters ausgekoppelt wird, ausschließlich auf den ersten Abschnitt der Lichteintrittsfläche des ersten optischen Elements trifft. Mit anderen Worten, trifft Licht, welches aus dem ersten Bereich des Lichtleiters austritt, nicht auf den gesamten zweiten Abschnitt der Lichteintrittsfläche des ersten optischen Elements.

Es kann vorgesehen sein, dass das zweite optische Element an einer dem gekrümmten Bereich des Lichtleiters zugewandten Fläche Eintrittsoptiken aufweist, welche dazu eingerichtet sind, das Licht, welches von dem gekrümmten Bereich des Lichtleiters ausgekoppelt wird, beim Eintritt in das zweite optische Element in Richtung des zweiten Abschnitts des ersten optischen Elements umzulenken. Die Eintrittsoptiken können als Facetten ausgebildet sein, welche sich in einem gleichmäßigen Raster über die dem gekrümmten Bereich des Lichtleiters zugewandten Fläche erstrecken. Die Eintrittsoptiken sind insbesondere dazu eingerichtet, die Lichtstrahlen derart umzulenken, dass sie nach dem Austritt aus dem zweiten optischen Element den gesamten zweiten Abschnitt des ersten optischen Elements beleuchten.

Es kann vorgesehen sein, dass das zweite optische Element an einer dem ersten optischen Element zugewandten Fläche Austrittsoptiken aufweist, welche dazu eingerichtet sind, das Licht beim Austritt aus dem zweiten optischen Element derart umzulenken, dass die aus dem zweiten optischen Element austretenden Lichtstrahlen parallel zu den aus dem ersten Abschnitt des Lichtleiters ausgekoppelten Lichtstrahlen orientiert sind. Die Austrittsoptiken können als Facetten ausgestaltet sein, welche die Lichtstrahlen beim Austritt parallelisieren.

Es kann vorgesehen sein, dass das zweite optische Element im Wesentlichen prismenartig ausgestaltet ist, wobei vorzugsweise eine erste Fläche des Prismas dem gekrümmten Bereich des Lichtleiters und eine zweite Fläche des Prismas der Lichteintrittsfläche des zweiten Abschnitts des ersten optischen Elements zugewandt ist. Das zweite optische Element kann auch keilförmig ausgestaltet sein. Insbesondere füllt das zweite optische Element zumindest teilweise oder vollständig den Raum, welcher sich zwischen dem gekrümmten Bereich des Lichtleiters und dem zweiten Abschnitt des ersten optischen Elements befindet. Dadurch kann eine besonders kompakte und platzsparende Bauart erzielt werden.

Es kann vorgesehen sein, dass der Lichtleiter und das zweite optische Element zueinander beabstandet sind und/oder das erste optische Element und das zweite optische Element zueinander beabstandet sind. Dadurch ergibt sich der Vorteil, dass die optisch aktiven Flächen durch einen unerwünschten Kontakt, beispielsweise auf Grund von Vibrationen, nicht beschädigt werden.

Es kann vorgesehen sein, dass eine dem Lichtleiter zugewandte Fläche des zweiten optischen Elements eine Krümmung aufweist, welche im Wesentlichen gleich der Krümmung des gekrümmten Bereichs des Lichtleiters ist. Der Abstand zwischen der dem Lichtleiter zugewandten Fläche des zweiten optischen Elements und dem gekrümmten Bereich kann konstant sein.

Es kann vorgesehen sein, dass eine dem ersten optischen Element zugewandte Fläche des zweiten optischen Elements im Wesentlichen parallel zu der Lichteintrittsfläche des ersten optischen Elements orientiert ist.

Es kann vorgesehen sein, dass das erste optische Element dazu eingerichtet ist, eine Lichtfunktion, insbesondere eine Signallichtfunktion, zu erzeugen. Beispielsweise kann mit der Beleuchtungsvorrichtung eine Seitenmarkierungsleuchte, ein Tagfahrlicht, ein Fahrtrichtungsanzeiger oder ein Positionslicht für ein Kraftfahrzeug bereitgestellt werden. Das Licht, welches aus dem ersten optischen Element austritt, wird vorzugsweise in Richtung HV abgestrahlt.

Es kann vorgesehen sein, dass das zweite optische Element als transparenter Vollkörper ausgebildet ist. Alternativ dazu, kann das zweite optische Element als Hohlkörper ausgebildet sein.

Es kann vorgesehen sein, dass der gekrümmte Bereich des Lichtleiters und das zweite optische Element einstückig ausgebildet sind. In diesem Fall können der Lichtleiter und das zweite optische Element ein unterschiedliches Material aufweisen, wobei die beiden Materialien einen unterschiedlichen Brechungsindex aufweisen können. An der Grenzfläche zwischen dem gekrümmten Bereich des Lichtleiters und dem zweiten optischen Element, kann es zu der Brechung des Lichts in Richtung des zweiten Abschnitts der Lichteintrittsfläche des ersten optischen Elements kommen, sodass der gesamte zweite Abschnitt, nach dem Austritt aus dem zweiten optischen Element, beleuchtet wird. Der gekrümmte Beriech des Lichtleiters und das zweite optische Element können auch einstückig und aus demselben Material hergestellt werden. Alternativ dazu kann vorgesehen sein, dass das erste optische Element und das zweite optische Element einstückig ausgebildet sind.

Erfindungsgemäß ist ein Kraftfahrzeugscheinwerfer-System vorgesehen, umfassend zumindest einen, vorzugsweise zwei, Kraftfahrzeugscheinwerfer und eine Beleuchtungsvorrichtung, wobei vorzugsweise die Beleuchtungsvorrichtung zwischen den beiden Kraftfahrzeugscheinwerfern angeordnet ist. Damit ergibt sich der Vorteil, dass beispielsweise an einer Vorderseite eines Kraftfahrzeugs, welches das Kraftfahrzeugscheinwerfer-System ausweist, zusätzlich zu dem Licht der beiden Scheinwerfer, eine Signallichtfunktion mit der Beleuchtungsvorrichtung erzeugt werden kann. Diese Signallichtfunktion kann über bzw. unter und/oder zwischen den beiden Scheinwerfern abgestrahlt werden. Das Kraftfahrzeugscheinwerfer-System kann alternativ dazu zumindest einen, vorzugsweise zwei, Kraftfahrzeugscheinwerfer umfassen, wobei die Beleuchtungsvorrichtung beispielsweise innerhalb, vorzugsweise an einem Randbereich, des Kraftfahrzeugscheinwerfers angeordnet sein kann, um eine zusätzliche Lichtfunktion für den Kraftfahrzeugscheinwerfer bereitzustellen.

Es kann vorgesehen sein, dass der Lichtleiter der Beleuchtungsvorrichtung ein erstes und ein zweites Ende aufweist, wobei an jedem Ende Licht mittels einer Lichtquelle in den Lichtleiter eingekoppelt wird.

Erfindungsgemäß ist ein Kraftfahrzeug vorgesehen, mit einer Beleuchtungsvorrichtung oder einem Kraftfahrzeugscheinwerfer-System, umfassend zumindest einen, vorzugsweise zwei, Kraftfahrzeugscheinwerfer und eine oben beschriebene Beleuchtungsvorrichtung,
Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Detailansicht einer Beleuchtungsvorrichtung gemäß dem Stand der Technik;
Fig. 2a, 2b und 3 Detailansichten einer erfindungsgemäßen Beleuchtungsvorrichtung;
Fig. 4 eine zweite Ausführungsform einer erfindungsgemäßen Beleuchtungsvorrichtung.

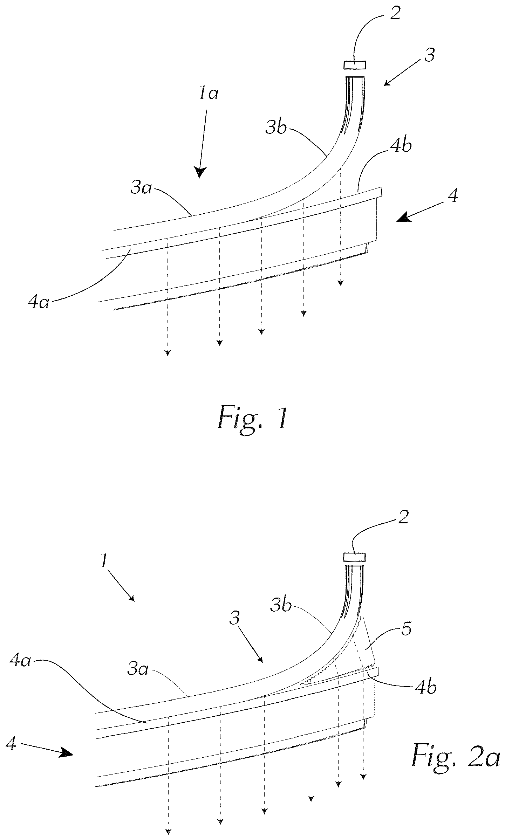

Fig. 1 zeigt einen Ausschnitt einer Beleuchtungsvorrichtung 1a für ein Kraftfahrzeug gemäß dem Stand der Technik. Die Beleuchtungsvorrichtung 1a umfasst ein Leuchtmittel 2 zur Erzeugung und Abstrahlung von Licht und einen Lichtleiter 3, wobei das Licht des Leuchtmittels 2 in den Lichtleiter 3 eingekoppelt und an einer Auskoppelfläche des Lichtleiters 3 ausgekoppelt wird. Der Lichtleiter 3 hat einen ersten Bereich 3a und einen an den ersten Bereich 3a anschließenden gekrümmten Bereich 3b. Die Auskoppelfläche erstreckt sich über den ersten 3a und den gekrümmten Bereich 3b. Der Lichtleiter ist dergestalt ausgebildet, dass die Lichtstrahlen nach dem Auskoppeln aus dem ersten Bereich 3a parallel zueinander orientiert sind. Die Beleuchtungsvorrichtung 1a umfasst ein erstes optisches Element 4 mit einer Lichteintrittsfläche, welche einen ersten Abschnitt 4a und einen an den ersten Abschnitt angrenzenden zweiten Abschnitt 4b aufweist. Das erste optische Element 4 ist zu dem Lichtleiter 3 dergestalt angeordnet, dass Licht, welches aus dem ersten Bereich 3a des Lichtleiters 3 ausgekoppelt wird, auf den ersten Abschnitt 4a der Lichteintrittsfläche des ersten optische Elements 4 trifft. Licht, welches aus dem gekrümmten Bereich 3b des Lichtleiters 3 ausgekoppelt wird, trifft lediglich auf einen Teilbereich des zweiten Abschnitts 4b der Lichteintrittsfläche des ersten optischen Elements 4.

Die Lichtstrahlen sind nach dem Auskoppeln aus dem ersten Bereich 3a des Lichtleiters 3 orthogonal zu dem ersten Bereich 3a des Lichtleiters 3 und orthogonal zur Lichteintrittsfläche 4a, 4b des ersten optischen Elements 4 orientiert. Die Lichtstrahlen können nach dem Auskoppeln auch in x-Richtung orientiert sein. Licht, welches aus dem ersten Bereich 3a des Lichtleiters 3 ausgekoppelt wird, trifft ausschließlich auf den ersten Abschnitt 4a der Lichteintrittsfläche des ersten optischen Elements 4 und kann auch einen Teilbereich des zweiten Abschnitts 4b beleuchten. Somit wird nachteiligerweise, auf Grund der Krümmung des Lichtleiters, der zweiten Abschnitt 4b der Lichteintrittsfläche nicht vollständig beleuchtet.

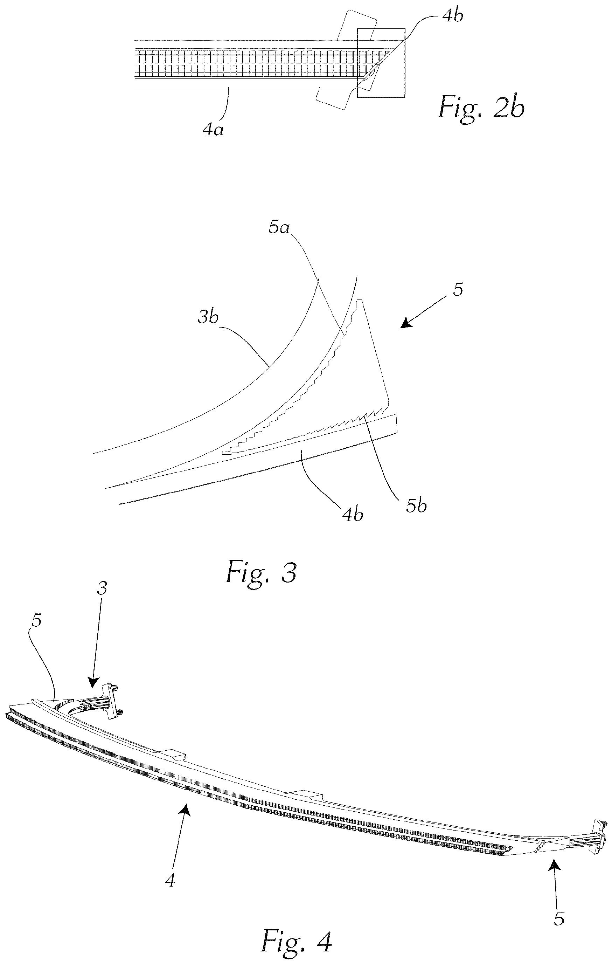

Fig. 2a, 2b und im Detail Fig. 3 zeigen eine erfindungsgemäße Beleuchtungsvorrichtung 1. Die Beleuchtungsvorrichtung 1 weist die Komponenten der Beleuchtungsvorrichtung 1a auf und umfasst zusätzlich ein zweites optisches Element 5, welches zwischen dem gekrümmten Bereich 3b des Lichtleiters 3 und dem zweiten Abschnitt 4b der Lichteintrittsfläche des ersten optischen Elements 4 angeordnet und dazu eingerichtet ist, Licht, welches aus dem gekrümmten Bereich 3b des Lichtleiters 3 ausgekoppelt wird, derart umzulenken, dass das Licht, nach dem Durchtritt durch das zweite optische Element 5, auf den gesamten zweiten Abschnitt 4b der Lichteintrittsfläche des ersten optischen Elements 4 trifft. Der erste Bereich 3a des Lichtleiters 3 und der erste Abschnitt 4a des ersten optischen Elements 4 sind im Wesentlichen parallel zu einander orientiert. Das zweite optische Element 5 hat an einer dem gekrümmten Bereich 3b des Lichtleiters 3 zugewandten Fläche 5a Eintrittsoptiken, welche dazu eingerichtet sind, das Licht, welches von dem gekrümmten Bereich 3b des Lichtleiters 3 ausgekoppelt wird, beim Eintritt in das zweite optische Element 5 in Richtung des zweiten Abschnitts 4b des ersten optischen Elements 4 umzulenken.

Das zweite optische Element 5 hat an einer dem ersten optischen Element 4 zugewandten Fläche 5b Austrittsoptiken, welche dazu eingerichtet sind, das Licht beim Austritt aus dem zweiten optischen Element 5 derart umzulenken, dass die aus dem zweiten optischen Element 5 austretenden Lichtstrahlen parallel zu den aus dem ersten Abschnitt 3a des Lichtleiters 3 ausgekoppelten Lichtstrahlen orientiert sind.

Das zweite optische Element 5 kann im Wesentlichen prismenartig ausgestaltet sein, wobei eine erste Fläche des Prismas dem gekrümmten Bereich 3b des Lichtleiters 3 und eine zweite Fläche des Prismas der Lichteintrittsfläche des zweiten Abschnitts 4b des ersten optischen Elements 4 zugewandt ist. Die dem Lichtleiter 3 zugewandte Fläche 5a des zweiten optischen Elements 5 hat eine Krümmung, welche im Wesentlichen gleich der Krümmung des gekrümmten Bereichs 3b des Lichtleiters 3 ist. Die dem ersten optischen Element 4 zugewandte Fläche 5b des zweiten optischen Elements 5 ist im Wesentlichen parallel zu der Lichteintrittsfläche 4a, 4b des ersten optischen Elements 4 orientiert. In dem gezeigten Ausführungsbeispiels ist das zweite optische Element 5 zu dem ersten optischen Element 4 und dem Lichtleiter 3 beabstandet.

Fig. 2b zeigt eine Ansicht auf die Lichteintrittsflächen 4a, 4b. Die Lichteintrittsflächen 4a, 4b können einen stufenförmigen Aufbau aufweisen.

Fig. 4 zeigt eine Ansicht einer zweiten Ausführungsform der Beleuchtungsvorrichtung 1. Bei dieser Aufführungsform weist der Lichtleiter 3 ein erstes und ein zweites Ende auf, wobei an jedem Ende Licht mittels eines Leuchtmittels 2 in den Lichtleiter 3 eingekoppelt wird, wobei das Licht nach dem Auskoppeln aus dem Lichtleiter auf die Lichteintrittsfläche des ersten optischen Elements 4 abgestrahlt wird. An das erste und zweite Ende des Lichtleiters 3 schließt jeweils ein gekrümmter Bereich an, wobei an den beiden gekrümmten Bereichen jeweils ein zweites optisches Element 5 gemäß den Fig. 2a, 2b und 3 angeordnet sein kann. Damit kann eine beidseitige Lichteinkopplung in den Lichtleiter 3 erfolgen.

## Patentansprüche

1. Beleuchtungsvorrichtung (1) für ein Kraftfahrzeug oder für ein Kraftfahrzeugscheinwerfer-System, wobei die Beleuchtungsvorrichtung Folgendes umfasst:
- ein Leuchtmittel (2) zur Erzeugung und Abstrahlung von Licht,
- einen Lichtleiter (3), wobei das Licht des Leuchtmittels (2) in den Lichtleiter (3) eingekoppelt und an einer Auskoppelfläche des Lichtleiters (3) ausgekoppelt wird, wobei der Lichtleiter (3) einen ersten Bereich (3a) und einen an den ersten Bereich (3a) anschließenden gekrümmten Bereich (3b) aufweist, wobei sich die Auskoppelfläche über den ersten (3a) und den gekrümmten Bereich (3b) erstreckt und dergestalt ausgebildet ist, dass die Lichtstrahlen nach dem Auskoppeln aus dem ersten Bereich (3a) parallel zueinander orientiert sind,
- ein erstes optisches Element (4) mit einer Lichteintrittsfläche, welche einen ersten Abschnitt (4a) und einen an den ersten Abschnitt angrenzenden zweiten Abschnitt (4b) aufweist, wobei das erste optische Element (4) zu dem Lichtleiter (3) dergestalt angeordnet ist, dass Licht, welches aus dem ersten Bereich (3a) des Lichtleiters (3) ausgekoppelt wird, auf den ersten Abschnitt (4a) der Lichteintrittsfläche des ersten optische Elements (4) trifft, und Licht, welches aus dem gekrümmten Bereich (3b) des Lichtleiters (3) ausgekoppelt wird, auf einen Teilbereich des zweiten Abschnitts (4b) der Lichteintrittsfläche des ersten optischen Elements (4) trifft,
**dadurch gekennzeichnet, dass**
die Beleuchtungsvorrichtung (1) ein zweites optisches Element (5) aufweist, welches zwischen dem gekrümmten Bereich (3b) des Lichtleiters (3) und dem zweiten Abschnitt (4b) der Lichteintrittsfläche des ersten optischen Elements (4) dergestalt angeordnet und dazu eingerichtet ist, Licht, welches aus dem gekrümmten Bereich (3b) des Lichtleiters (3) ausgekoppelt wird, derart umzulenken, dass das Licht, nach dem Durchtritt durch das zweite optische Element (5), auf den gesamten zweiten Abschnitt (4b) der Lichteintrittsfläche des ersten optischen Elements (4) trifft.

2. Beleuchtungsvorrichtung (1) nach Anspruch 1, wobei der erste Bereich (3a) des Lichtleiters (3) und der erste Abschnitt (4a) des ersten optischen Elements (4) im Wesentlichen parallel zu einander orientiert sind.

3. Beleuchtungsvorrichtung (1) nach einem der vorhergehenden Ansprüche, wobei die Lichtstrahlen nach dem Auskoppeln aus dem Lichtleiter (3) orthogonal zu dem ersten Bereich (3a) des Lichtleiters (3) und/oder vorzugsweise orthogonal zur Lichteintrittsfläche (4a, 4b) des ersten optischen Elements (4) orientiert sind.

4. Beleuchtungsvorrichtung (1) nach einem der vorhergehenden Ansprüche, wobei Licht, welches aus dem ersten Bereich (3a) des Lichtleiters (3) ausgekoppelt wird, ausschließlich auf den ersten Abschnitt (4a) der Lichteintrittsfläche des ersten optischen Elements (4) trifft.

5. Beleuchtungsvorrichtung (1) nach einem der vorhergehenden Ansprüche, wobei das zweite optische Element (4) an einer dem gekrümmten Bereich (3b) des Lichtleiters (3) zugewandten Fläche (5a) Eintrittsoptiken aufweist, welche dazu eingerichtet sind, das Licht, welches von dem gekrümmten Bereich (3b) des Lichtleiters (3) ausgekoppelt wird, beim Eintritt in das zweite optische Element (5) in Richtung des zweiten Abschnitts (4b) des ersten optischen Elements (4) umzulenken.

6. Beleuchtungsvorrichtung (1) nach einem der vorhergehenden Ansprüche, wobei das zweite optische Element (5) an einer dem ersten optischen Element (4) zugewandten Fläche (5b) Austrittsoptiken aufweist, welche dazu eingerichtet sind, das Licht beim Austritt aus dem zweiten optischen Element (5) derart umzulenken, dass die aus dem zweiten optischen Element (5) austretenden Lichtstrahlen parallel zu den aus dem ersten Abschnitt (3a) des Lichtleiters (3) ausgekoppelten Lichtstrahlen orientiert sind.

7. Beleuchtungsvorrichtung (1) nach einem der vorhergehenden Ansprüche, wobei das zweite optische Element (5) im Wesentlichen prismenartig ausgestaltet ist, wobei vorzugsweise eine erste Fläche des Prismas dem gekrümmten Bereich (3b) des Lichtleiters (3) und eine zweite Fläche des Prismas der Lichteintrittsfläche des zweiten Abschnitts (4b) des ersten optischen Elements (4) zugewandt ist.

8. Beleuchtungsvorrichtung (1) nach einem der vorhergehenden Ansprüche, wobei der Lichtleiter (3) und das zweite optische Element (5) zueinander beabstandet sind und/oder das erste optische Element (4) und das zweite optische Element (5) zueinander beabstandet sind.

9. Beleuchtungsvorrichtung (1) nach einem der vorhergehenden Ansprüche, wobei eine dem Lichtleiter (3) zugewandte Fläche (5a) des zweiten optischen Elements (5) eine Krümmung aufweist, welche im Wesentlichen gleich der Krümmung des gekrümmten Bereichs (3b) des Lichtleiters (3) ist.

10. Beleuchtungsvorrichtung (1) nach einem der vorhergehenden Ansprüche, wobei eine dem ersten optischen Element (4) zugewandte Fläche (5b) des zweiten optischen Elements (5) im Wesentlichen parallel zu der Lichteintrittsfläche (4a, 4b) des ersten optischen Elements (4) orientiert ist.

11. Beleuchtungsvorrichtung (1) nach einem der vorhergehenden Ansprüche, wobei das erste optische Element (4) dazu eingerichtet ist, eine Lichtfunktion, insbesondere eine Signallichtfunktion, zu erzeugen.

12. Beleuchtungsvorrichtung (1) nach einem der vorhergehenden Ansprüche, wobei das zweite optische Element (5) als transparenter Vollkörper ausgebildet ist.

13. Beleuchtungsvorrichtung (1) nach einem der vorhergehenden Ansprüche, wobei der gekrümmte Bereich (3b) des Lichtleiters (3) und das zweite optische Element (5) einstückig ausgebildet sind.

14. Kraftfahrzeugscheinwerfer-System, umfassend zumindest einen, vorzugsweise zwei, Kraftfahrzeugscheinwerfer und eine Beleuchtungsvorrichtung (1) nach einem der Ansprüche 1-13, wobei vorzugsweise die Beleuchtungsvorrichtung (1) zwischen den beiden Kraftfahrzeugscheinwerfern angeordnet ist.

15. Kraftfahrzeugscheinwerfer-System nach Anspruch 14, wobei der Lichtleiter (3) der Beleuchtungsvorrichtung (1) ein erstes und ein zweites Ende aufweist, wobei an jedem Ende Licht mittels einer Lichtquelle in den Lichtleiter (3) eingekoppelt wird.

## Claims

1. Lighting device (1) for a motor vehicle or for a motor vehicle headlamp system, the lighting device comprising:
- a luminous means (2) for generating and emitting light,
- a light guide (3), wherein the light of the illuminant (2) is coupled into the light guide (3) and is coupled out at an outcoupling surface of the light guide (3), wherein the light guide (3) has a first region (3a) and a curved region (3b) which adjoins the first region (3a) wherein the decoupling surface extends over the first (3a) and the curved region (3b) and is formed such that the light beams are oriented parallel to each other after decoupling from the first region (3a),
- a first optical element (4) having a light input surface comprising a first portion (4a) and a second portion (4b) adjacent to the first portion, the first optical element (4) being arranged with respect to the light guide (3) such that light coupled out from the first region (3a) of the light guide (3) is incident on the first portion (4a) of the light incident surface of the first optical element (4), and light coupled out from the curved portion (3b) of the light guide (3) is incident on a partial portion of the second portion (4b) of the light incident surface of the first optical element (4),
**characterized in that**
the illumination device (1) comprises a second optical element (5) which is arranged between the curved region (3b) of the light guide (3) and the second portion (4b) of the light entrance surface of the first optical element (4) and is adapted to deflect light which is coupled out of the curved region (3b) of the light guide (3) in such a way that the light, after passing through the second optical element (5), is deflected by the first optical element (4), light coupled out of the curved portion (3b) of the light guide (3) in such a way that the light, after passing through the second optical element (5), impinges on the entire second portion (4b) of the light entrance surface of the first optical element (4).

2. Lighting device (1) according to claim 1, wherein the first portion (3a) of the light guide (3) and the first portion (4a) of the first optical element (4) are oriented substantially parallel to each other.

3. Lighting device (1) according to any one of the preceding claims, wherein the light beams after decoupling from the light guide (3) are oriented orthogonally to the first region (3a) of the light guide (3) and/or preferably orthogonally to the light entrance surface (4a, 4b) of the first optical element (4).

4. Lighting device (1) according to one of the preceding claims, wherein light which is coupled out of the first region (3a) of the light guide (3) impinges exclusively on the first portion (4a) of the light entry surface of the first optical element (4).

5. Lighting device (1) according to any one of the preceding claims, wherein the second optical element (4) has, at a surface (5a) facing the curved region (3b) of the light guide (3), entrance optics which are arranged to deflect the light, which is coupled out from the curved region (3b) of the light guide (3), in the direction of the second section (4b) of the first optical element (4) when it enters the second optical element (5).

6. Lighting device (1) according to one of the preceding claims, wherein the second optical element (5) has exit optics on a surface (5b) facing the first optical element (4), which optics are set up to deflect the light as it emerges from the second optical element (5) in such a way that the light rays emerging from the second optical element (5) are oriented parallel to the light rays coupled out of the first section (3a) of the light guide (3).

7. Lighting device (1) according to any one of the preceding claims, wherein the second optical element (5) is substantially prism-shaped, preferably with a first surface of the prism facing the curved portion (3b) of the light guide (3) and a second surface of the prism facing the light entrance surface of the second portion (4b) of the first optical element (4).

8. Lighting device (1) according to any one of the preceding claims, wherein the light guide (3) and the second optical element (5) are spaced apart from each other and/or the first optical element (4) and the second optical element (5) are spaced apart from each other.

9. Lighting device (1) according to any one of the preceding claims, wherein a surface (5a) of the second optical element (5) facing the light guide (3) has a curvature which is substantially equal to the curvature of the curved region (3b) of the light guide (3).

10. Lighting device (1) according to any one of the preceding claims, wherein a surface (5b) of the second optical element (5) facing the first optical element (4) is oriented substantially parallel to the light entrance surface (4a, 4b) of the first optical element (4).

11. Lighting device (1) according to any one of the preceding claims, wherein the first optical element (4) is arranged to generate a light function, in particular a signal light function.

12. Lighting device (1) according to one of the preceding claims, wherein the second optical element (5) is designed as a transparent solid body.

13. Lighting device (1) according to any one of the preceding claims, wherein the curved region (3b) of the light guide (3) and the second optical element (5) are formed integrally.

14. Motor vehicle headlamp system, comprising at least one, preferably two, motor vehicle headlamps and a lighting device (1) according to any one of claims 1-13, wherein preferably the lighting device (1) is arranged between the two motor vehicle headlamps.

15. Motor vehicle headlamp system according to claim 14, wherein the light guide (3) of the illumination device (1) has a first and a second end, wherein at each end light is coupled into the light guide (3) by means of a light source.

## Revendications

1. Dispositif d'éclairage (1) pour un véhicule automobile ou pour un système de phares de véhicule automobile, ledit dispositif d'éclairage comprenant :
- un moyen d'éclairage (2) pour produire et émettre de la lumière,
- un guide de lumière (3), la lumière du moyen d'éclairage (2) étant couplée dans le guide de lumière (3) et découplée sur une surface de découplage du guide de lumière (3), le guide de lumière (3) présentant une première zone (3a) et une zone incurvée (3b) se raccordant à la première zone (3a), la surface de découplage s'étendant sur la première (3a) et la zone courbe (3b) et étant conçue de telle sorte que les rayons lumineux sont orientés parallèlement les uns aux autres après le découplage de la première zone (3a),
- un premier élément optique (4) avec une surface d'entrée de lumière qui présente une première section (4a) et une deuxième section (4b) adjacente à la première section, le premier élément optique (4) étant disposé par rapport au guide de lumière (3) de telle sorte que la lumière qui est couplée hors de la première zone (3a) du guide de lumière (3), frappe la première partie (4a) de la surface d'entrée de la lumière du premier élément optique (4), et la lumière qui est découplée de la zone courbe (3b) du guide de lumière (3) frappe une partie de la deuxième partie (4b) de la surface d'entrée de la lumière du premier élément optique (4),
**caractérisé en ce que**
le dispositif d'éclairage (1) comprend un deuxième élément optique (5) qui est disposé entre la zone incurvée (3b) du guide de lumière (3) et la deuxième partie (4b) de la surface d'entrée de la lumière du premier élément optique (4) et qui est conçu de telle sorte que la lumière qui est sortie de la zone incurvée (3b) du guide de lumière (3) est transmise à la zone d'entrée de la lumière du premier élément optique (4), qui est découplée de la zone courbe (3b) du guide de lumière (3), de telle sorte que la lumière, après avoir traversé le deuxième élément optique (5), arrive sur toute la deuxième partie (4b) de la surface d'entrée de la lumière du premier élément optique (4).

2. Dispositif d'éclairage (1) selon la revendication 1, dans lequel la première zone (3a) du guide de lumière (3) et la première partie (4a) du premier élément optique (4) sont orientées de manière sensiblement parallèle l'une à l'autre.

3. Dispositif d'éclairage (1) selon l'une des revendications précédentes, dans lequel les rayons lumineux, après avoir été découplés du guide de lumière (3), sont orientés orthogonalement à la première zone (3a) du guide de lumière (3) et/ou de préférence orthogonalement à la surface d'entrée de lumière (4a, 4b) du premier élément optique (4).

4. Dispositif d'éclairage (1) selon l'une quelconque des revendications précédentes, dans lequel la lumière extraite de la première zone (3a) du guide de lumière (3) arrive exclusivement sur la première partie (4a) de la surface d'entrée de lumière du premier élément optique (4).

5. Dispositif d'éclairage (1) selon l'une quelconque des revendications précédentes, dans lequel le deuxième élément optique (4) comporte, sur une face (5a) tournée vers la zone courbe (3b) du guide de lumière (3), des optiques d'entrée adaptées pour dévier la lumière extraite de la zone courbe (3b) du guide de lumière (3) vers la deuxième portion (4b) du premier élément optique (4) lors de son entrée dans le deuxième élément optique (5).

6. Dispositif d'éclairage (1) selon l'une quelconque des revendications précédentes, dans lequel le deuxième élément optique (5) comporte, sur une face (5b) tournée vers le premier élément optique (4), des optiques de sortie agencées pour dévier la lumière en sortie du deuxième élément optique (5) de telle sorte que les rayons lumineux sortant du deuxième élément optique (5) soient orientés parallèlement aux rayons lumineux découplés de la première portion (3a) du guide de lumière (3).

7. Dispositif d'éclairage (1) selon l'une des revendications précédentes, dans lequel le deuxième élément optique (5) est sensiblement en forme de prisme, une première face du prisme étant de préférence tournée vers la zone incurvée (3b) du guide de lumière (3) et une deuxième face du prisme étant tournée vers la surface d'entrée de la lumière de la deuxième section (4b) du premier élément optique (4).

8. Dispositif d'éclairage (1) selon l'une quelconque des revendications précédentes, dans lequel le guide de lumière (3) et le deuxième élément optique (5) sont espacés l'un de l'autre et/ou le premier élément optique (4) et le deuxième élément optique (5) sont espacés l'un de l'autre.

9. Dispositif d'éclairage (1) selon l'une des revendications précédentes, dans lequel une surface (5a) du deuxième élément optique (5) tournée vers le guide de lumière (3) présente une courbure qui est sensiblement égale à la courbure de la zone courbée (3b) du guide de lumière (3).

10. Dispositif d'éclairage (1) selon l'une des revendications précédentes, dans lequel une face (5b) du deuxième élément optique (5) tournée vers le premier élément optique (4) est orientée sensiblement parallèlement à la face d'entrée de lumière (4a, 4b) du premier élément optique (4).

11. Dispositif d'éclairage (1) selon l'une des revendications précédentes, dans lequel le premier élément optique (4) est agencé pour générer une fonction lumineuse, notamment une fonction lumineuse de signalisation.

12. Dispositif d'éclairage (1) selon l'une des revendications précédentes, dans lequel le deuxième élément optique (5) est conçu comme un corps plein transparent.

13. Dispositif d'éclairage (1) selon l'une quelconque des revendications précédentes, dans lequel la zone incurvée (3b) du guide de lumière (3) et le deuxième élément optique (5) sont formés d'une seule pièce.

14. Système de projecteur de véhicule automobile, comprenant au moins un, de préférence deux, projecteur de véhicule automobile et un dispositif d'éclairage (1) selon l'une quelconque des revendications 1 à 13, dans lequel, de préférence, le dispositif d'éclairage (1) est disposé entre les deux projecteurs de véhicule automobile.

15. Système de projecteur de véhicule automobile selon la revendication 14, dans lequel le guide de lumière (3) du dispositif d'éclairage (1) présente une première et une deuxième extrémité, de la lumière étant injectée dans le guide de lumière (3) à chaque extrémité au moyen d'une source lumineuse.
